**Europäisches Patentamt**

**European Patent Office**

**Office européen des brevets**

(11) Veröffentlichungsnummer: **0 458 186 A2**

# (12) EUROPÄISCHE PATENTANMELDUNG

(21) Anmeldenummer: **91107904.4**

(22) Anmeldetag: **16.05.91**

(51) Int. Cl.5: **H04L 7/00**

(30) Priorität: **19.05.90 DE 4016189**

(43) Veröffentlichungstag der Anmeldung:
**27.11.91 Patentblatt 91/48**

(84) Benannte Vertragsstaaten:
**DE FR GB IT**

(71) Anmelder: **Philips Patentverwaltung GmbH**
**Wendenstrasse 35 Postfach 10 51 49**
**W-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **FR GB IT**

(72) Erfinder: **Schrot, Volkmar, Dipl.-Ing.**
**Am Stadtpark 43**
**W-8500 Nürnberg 10(DE)**

(74) Vertreter: **Volmer, Georg et al**
**Philips Patentverwaltung GmbH**
**Wendenstrasse 35, Postfach 10 51 49**
**W-2000 Hamburg 1(DE)**

(54) **Einrichtung zur Phasenjitterreduzierung.**

(57)
2.1. Die Erfindung betrifft eine Einrichtung zur Phasenjitterreduzierung für mindestens ein digitales Datensignal. Die Einrichtung soll bei geringem Bauteileaufwand eine wirksame Reduzierung des Phasenjitters des digitalen Datensignals ermöglichen.

2.2. Es wird eine Speichereinheit (13) vorgeschlagen mit einem Speicher (1), mit einer Einleseeinheit (2) zum Einlesen des digitalen Datensignals mit einem vorgeschalteten mit einem jitterbehafteten ersten Takt (6) getakteten ersten Zähler (4) und mit einer Ausleseeinheit (3) zum Auslesen des digitalen Datensignals mit einem nachgeschalteten mit einem gegenüber dem ersten Takt (6) jitterreduzierten zweiten Takt (8) getakteten und gegenüber dem ersten Zähler (4) zeitverzögerten zweiten Zähler (5).

2.3. Digitale Übertragungstechnik.

Die Erfindung betrifft eine Einrichtung zur Phasenjitterreduzierung für mindestens ein digitales Datensignal.

Derartige Einrichtungen (Dejitterizer) werden beispielsweise bei Nachrichtenübertragungssystemen benötigt, um in digitalen Datensignalen enthaltene Phasenverzerrungen (Jitter) zu unterdrücken bzw. zu vermindern.

Der Erfindung liegt die Aufgabe zugrunde, eine Einrichtung der eingangs genannten Art anzugeben, die bei geringem Aufwand eine wirksame Reduzierung des Phasenjitters des digitalen Datensignals ermöglicht.

Diese Aufgabe wird bei einer Einrichtung der eingangs genannten Art durch eine Speichereinheit mit einem Speicher, mit einer Einleseeinheit zum Einlesen des digitalen Datensignals mit einem vorgeschalteten mit einem jitterbehafteten ersten Takt getakteten ersten Zähler und mit einer Ausleseeinheit zum Auslesen des digitalen Datensignals mit einem nachgeschalteten mit einem gegenüber dem ersten Takt jitterreduzierten zweiten Takt getakteten und gegenüber dem ersten Zähler zeitverzögerten zweiten Zähler gelöst.

Dabei steuert der erste Zähler den Einlesevorgang des jitterbehafteten digitalen Datensignals, welches über die Einleseeinheit dem Speicher zugeführt wird. Der jitterreduzierte zweite Takt wird beispielsweise aus einem separaten Taktgenerator entnommen oder aus dem jitterbehafteten ersten Takt mit Hilfe eines Phasenregelkreises gewonnen. Ein dazu benötigter Phasenregelkreis ist ohne großen Aufwand realisierbar, da keine aufwendigen Teiler benötigt werden. Der Auslesevorgang wird von dem der Ausleseeinheit nachgeschalteten zweiten Zähler so gesteuert, daß der Auslesevorgang gegenüber dem Einlesevorgang zeitverzögert erfolgt. Die damit verbundene Jitterreserve führt dazu, daß aus der Ausleseeinheit ein jitterreduziertes digitales Datensignal auslesbar ist.

Bei einer Ausgestaltungsform ist zur Steuerung der Zeitverzögerung zwischen Einleseeinheit und Ausleseeinheit eine Synchronisationseinheit vorgesehen. Die Synchronisationseinheit ist dazu mit der Einlese- und Ausleseeinheit sowie mit dem zweiten Zähler verbunden und ermöglicht eine Vorgabe der Zeitverzögerung zwischen Einlese- und Auslesevorgang. Dadurch kann auf einfache Weise die Zeitverzögerung und die damit verbundene Jitterreserve dem digitalen Datensignal angepaßt werden.

Bei einer weiteren Ausgestaltungsform ist eine Starteinheit vorgesehen, mit der die Zähler blockierbar und entsprechend der Zeitverzögerung vorbesetzbar sind. Dazu ist die Starteinheit mit dem ersten und zweiten Zähler verbunden. Die Starteinheit ermöglicht ein Blockieren der Zähler beim Einschalten der Einrichtung, beim Anlegen eines neuen digitalen Datensignales oder nach dessen Ausfall. Die Zähler werden zunächst blockiert und schließlich auf den der gewünschten Zeitverzögerung entsprechenden Wert vorbesetzt. Hierdurch wird eine schnelle Synchronisation insbesondere beim Einschalten erreicht.

Bei einer Ausgestaltungsform entspricht der erste Takt dem zweiten Takt. Diese Betriebsart entspricht einem Abschalten der Einrichtung zur Phasenjitterreduzierung, d.h. es erfolgt keine Jitterreduzierung des digtitalen Datensignals, sondern lediglich die vorgegebene Zeitverzögerung. Somit entfällt eine separate Abschaltvorrichtung für die Anwendungsfälle, bei denen keine Phasenjitterreduzierung erfolgen soll. Dies führt insbesondere bei einer Integration der Einrichtung zur Phasenjitterreduzierung zu einem minimalen Aufwand, d.h. zu einer minimalen Anzahl der benötigten Anschlüsse.

Bei einer Ausgestaltungsform sind die Einlese- und die Ausleseeinheit als Multiplexer ausgebildet. Dadurch wird auf einfache Weise eine Anpassung des ersten und zweiten Zählers an die Einlese- und Ausleseeinheit bzw. den Speicher erreicht.

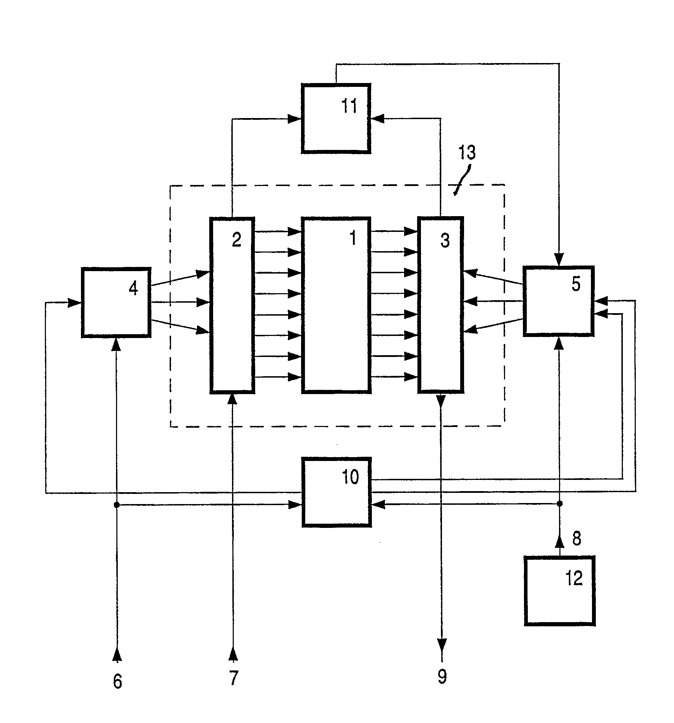

Im folgenden wir die Erfindung anhand des in der Figur dargestellten Ausführungsbeispiels näher erläutert.

Die Figur zeigt eine Einrichtung zur Phasenjitterreduzierung für ein digitales Datensignal.

Die in der Figur dargestellte Einrichtung zur Phasenjitterreduzierung weist eine Speichereinheit 13 mit einem Speicher 1 auf, dem eine Einleseeinheit 2 vor- und eine Ausleseeinheit 3 nachgeschaltet ist. Der Einleseeinheit 2 wird ein ("verjittertes") erstes digitales Datensignal 7 (= Eingangssignal) zugeführt, während aus der Ausleseeinheit 3 ein gegenüber dem ersten Datensignal jitterreduziertes zweites digitales Datensignal 9 (= Ausgangssignal) ausgelesen wird. Der Einleseeinheit 2 ist ein erster Zähler 4 vor- und der Ausleseeinheit 3 ein zweiter Zähler 5 nachgeschaltet. Der erste Zähler 4 wird mit einem ersten Takt 6 gespeist, während dem zweiten Zähler 5 ein von einem Taktgenerator 12 gelieferter zweiter Takt 8 zugeführt wird. Die Einleseeinheit 2, die Ausleseeinheit 3 sowie der zweite Zähler 5 sind mittels einer Synchronisationseinrichtung 11 synchronisiert. Außerdem ist eine Starteinheit 10 vorgesehen, der der erste 6 und zweite 8 Takt zugeführt werden und deren Ausgangssignale den ersten 4 und zweiten 5 Zähler ansteuern.

Bei dem in der Figur dargestellten Ausführungsbeispiel sind der erste und zweite Zähler 4, 5 als 3-Bit-Zähler und die Einleseeinheit 2 sowie die Ausleseeinheit 3 als 3 auf 8-Multiplexer ausgebildet. Dabei geben die Ausgänge der Einleseeinheit 2 zyklisch die Eingänge der 8 Speicherzellen des als 8 Bit-Speichers ausgebildeten Speichers 1 frei, wobei die Datenbits des digitalen Datensignals 7 in die Speicherzelle des Speichers 1 eingelesen werden. Die Ausgabelogik für den Speicher 1 hat eine vergleichbare Struktur. Dabei steuert der zweite Zähler 5 über den 3 auf 8-Multiplexer 3 den Auslösevorgang der Speicherzellen des Speichers 1. Die Ausgänge der Ausleseeinheit 3 geben zyklisch die Ausgänge der Speicherzellen frei, wodurch die Datenbits des zweiten Datensignals 9 ausgelesen werden. Die an die Einleseeinheit 2, die Ausleseeinheit 3 sowie an den zweiten Zähler 5 angeschlossene Synchronisationseinrichtung 11 bewirkt und steuert eine Zeitverzögerung zwischen der Einleseeinheit 2 sowie der Ausleseeinheit 3. Dies verhindert, daß auf eine Speicherzelle des Speichers 1 von der Ausleseeinheit 3 und der Einleseeinheit 2 gleichzeitig zugegriffen wird. Hierdurch wird eine Jitterreserve zwischen Ein- und Ausgabe der Datensignale 7, 9 erreicht. Wird beispielsweise auf eine Speicherzelle des Speichers 1 von der Einleseeinheit 2 und der Ausleseeinheit 3 gleichzeitig zugegriffen, so bewirkt die Synchronisationseinrichtung 11 ein Anhalten des die Ausleseeinheit 3 ansteuernden zweiten Zählers 5 für eine vorgebbare Anzahl, beispielsweise Taktperioden. Dadurch liest die Ausleseeinheit 3 das Ausgangssignal 9 entsprechend dem Beispiel im Mittel vier Taktperioden nach dem Einlesen des Datensignals 7 aus, wodurch sich eine ausreichende Jitterreserve ergibt. Die an den ersten und zweiten Zähler 4, 5 angeschlossene Starteinheit 10 ermöglicht bei dem in der Figur dargestellten Ausführungsbeispiel ein blockieren der Zähler beim Einschalten der Einrichtung, beim Anlegen eines neuen digitalen Datensignals 7 oder nach dessen Ausfall, wodurch eine schnelle Synchronisation erreicht wird. Die Zähler 4, 5 werden zunächst blockiert und schließlich auf den der gewünschten Zeitverzögerung entsprechenden Wert vorbesetzt. So wird der erste Zähler 4 beispielsweise solange auf dem Zählerstand 000 gehalten, bis der erste Takt 6 und der zweite Takt 8 an der Einrichtung anliegen. Bevor die Zähler freigegeben werden, wird der die Ausleseeinheit 3 ansteuernde zweite Zähler 5 auf den Zählerstand 100 (= 4) vorbesetzt, d.h. der maximale Abstand zwischen Ein- und Auslesetakt an den Speicherzellen des Speichers 1 hergestellt. Bei dem in der Figur dargestellten Ausführungsbeispiel wird der zweite Takt 8 aus dem mit dem ersten Takt frequenzsynchronen Taktgenerator 12 geliefert. Die Einspeisung eines derartigen Normaltaktes kann direkt ohne Phasenregelschleife erfolgen. Eine weitere Möglichkeit besteht darin, den jitterreduzierten zweiten Takt aus dem verjitterten ersten Takt 6 mit Hilfe eines Phasenregelkreises zu gewinnen. Ein derartiger Phasenregelkreis ist ohne großen Aufwand realisierbar, da keine aufwendigen Teile benötigt werden.

Die in der Figur dargestellte Einrichtung zur Phasenjitterreduzierung kann auf einfache Weise für parallele Datenströme, z.B. ternäre Datenströme, aus zwei getrennten binären Datenströmen, erweitert werden. Hierfür wird lediglich eine zweite Speichereinheit benötigt. Die sonstige Beschaltung, insbesondere die Ein- und Ausleseeinheit, die Synchronisationseinrichtung sowie die Starteinheit werden lediglich einmal benötigt. Ein einfaches Abschalten der Einrichtung wird dadurch erreicht, daß der erste Takt dem zweiten Takt entspricht. In diesem Fall erfolgt keine Jitterreduzierung des digitalen Datensignals, sondern lediglich die vorgegebene Zeitverzögerung. Für diese Anwendungsfälle entfällt somit eine separate Abschaltvorrichtung.

**Patentansprüche**

1. Einrichtung zur Phasenjitterreduzierung für mindestens ein digitales Datensignal, gekennzeichnet durch, eine Speichereinheit (13) mit einem Speicher (1), mit einer Einleseeinheit (2) zum Einlesen des digitalen Datensignals mit einem vorgeschalteten mit einem jitterbehafteten ersten Takt (6) getakteten ersten Zähler (4) und mit einer Ausleseeinheit (3) zum Auslesen des digitalen Datensignals mit einem nachgeschalteten mit einem gegenüber dem ersten Takt (6) jitterreduzierten zweiten Takt (8) getakteten und gegenüber dem ersten Zähler (4) zeitverzögerten zweiten Zähler (5).

2. Einrichtung nach Anspruch 1, dadurch gekennzeichnet, daß zur Steuerung der Zeitverzögerung zwischen Einleseeinheit (2) und Ausleseeinheit (3) eine Synchronisationseinheit (11) vorgesehen ist.

3. Einrichtung nach einem der Ansprüche 1 bis 2,

dadurch gekennzeichnet,
daß eine Starteinheit (10) vorgesehen ist, mit der die Zähler (4, 5) blockierbar und entsprechend der Zeitverzögerung vorbesetzbar sind.

4. Einrichtung nach einem der Ansprüche 1 bis 3, dadurch gekennzeichnet, daß der erste Takt (6) dem zweiten Takt (8) entspricht.

5. Einrichtung nach einem der Ansprüche 1 bis 4, dadurch gekennzeichnet, daß die Einleseeinheit (2) und die Ausleseeinheit (3) als Multiplexer ausgebildet sind.